# EUROPEAN PATENT APPLICATION

(11) **EP 1 666 959 A1**
(43) Date of publication of application: **07.06.2006**
(21) Application number: 05025894.6
(22) Date of filing: 28.11.2005
(51) Int. Cl.: G02F 1/1339

(54) **Electrical connection in a liquid crystal cell using elastically deformable conducting particles**

(30) Priority: 02.12.2004 JP 2004349369
(71) Applicant: SONY CORPORATION, Tokyo (JP)
(72) Inventor: Ueshima, Masahiro Sony Corporation, Shinagawa-ku Tokyo (JP)
(74) Representative: Müller - Hoffmann & Partner

(57) **Abstract**

A liquid crystal device comprising: a liquid crystal arranged between a pair of substrates (1,2) disposed opposite to each other; a driving electrode (11) on a surface of one of the substrates, made of silicon (1); a counter electrode (21) provided on a surface of the other substrate, made of glass (2) for driving the liquid crystal; and conductive particles (3) clamped between the substrates, to provide an electrical connection between the driving electrode and the counter electrode, wherein the conductive particles (3) are each provided with projections (31), i.e protrusions or asperities, in the surface thereof. The projections (31) improve the electrical contact on compression by breaking surface oxides and displacing resin material of the seal in which the particles are embedded. The conductive particles may be used in transmissive LCDs having glass substrates. Moreover the liquid crystal device may be used in LCD projection systems.
The conductive particles (3) may consist of resin spheres which have been coated with a metal. When pressed between the substrates they are elastically deformed. The diameters of the particles are arranged to be in a range of 5 to 40% greater than the gap between the substrates. Furthermore, particles having at least two kinds of diameters may be used. This allows an optimum contact to be achieved even in the presence of cell-gap variations.

## Description

### CROSS REFERENCES TO RELATED APPLICATIONS

The present invention contains subject matter related to Japanese Patent Application JP 2004-349369 filed in Japanese Patent Office on December 2, 2004, the entire contents of which being incorporated herein by reference.

### BACKGROUND OF THE INVENTION

The present invention relates to a liquid crystal device, a liquid crystal display, and a liquid crystal projector wherein a liquid crystal is interposed between a pair of substrates disposed opposite to each other and is driven by supplying a voltage thereon from electrodes.

In recent years, attendant on the progress toward a higher definition, a smaller size and a higher luminance in liquid crystal projectors, the reflection type liquid crystal displays have been paid attention to and been put to practical use, as display devices which can be designed to have a smaller size and a higher definition and can be expected to show a high efficiency of light utilization. The reflection type liquid crystal display is an active type reflective liquid crystal display having a configuration in which a glass substrate provided with a transparent electrode is disposed on one side, whereas a silicon substrate composed, for example, of a C-MOS (Complementary-Metal Oxided Semiconductor) semiconductor circuit is disposed on the other side to be utilized as a drive device substrate, and the space between the pair of substrates is charged with a liquid crystal.

Pixel electrodes for reflecting light and for supplying a voltage on the liquid crystal are arrayed on the silicon drive substrate, and the pixel electrodes are generally composed of a metallic material containing aluminum, which is used in the LSI processes, as a main constituent. In addition, for the supply of a potential to the transparent electrode formed on the glass substrate, there may be contemplated a structure in which a package or a flexible cable is connected directly to the transparent electrode. However, this approach has considerable demerits such as limitations on the package shape, an increase in the number of steps for connecting the flexible cable, and limitations on the accuracy of connection. Therefore, a structure has been used in which the transparent electrode and the silicon drive substrate are electrically connected to each other through conductive particles mixed in an adhesive (see, for example, Japanese Patent Laid-open No. Hei 8-136952).

### SUMMARY OF THE INVENTION

However, in the case where the counter electrode and the silicon drive substrate are connected to each other by the conductive particles, a spontaneous oxide film on the surface of the metallic electrodes on the silicon drive substrate and/or the resin contained in the adhesive in which the conductive particles are mixed is present between the conductive particles and the electrodes, which makes it difficult to secure stable connection. For improving these instable factors, it may be necessary to break the spontaneous oxide film or to exclude the presence of the resin, by compressing the conductive particles to or in excess of a certain extent. On the other hand, when the compression ratio of the conductive particles is raised too much, the particles themselves would be broken, leading to conduction failure. Moreover, on a practical manufacture basis, there is a dispersion of the distance between the counter electrode and the silicon drive substrate. Therefore, it is very difficult to design a manufacturing process suitable for securing an appropriate compression ratio.

In order to solve the above-mentioned problems, according to one embodiment of the present invention, there is provided a liquid crystal device comprising: a liquid crystal interposed between a pair of substrates disposed opposite to each other; a first electrode provided on a surface of one of the pair of substrates, for driving the liquid crystal; a second electrode provided on a surface of the other of the pair of substrates, for driving the liquid crystal; and conductive particles clamped between the pair of substrates, for obtaining electrical conduction between the first electrode and the second electrode, wherein the conductive particles are each provided with a projected shape in the surface thereof.

In addition, according to another embodiment of the present invention, there is provided a liquid crystal display comprising: a liquid crystal interposed between a pair of oppositely disposed substrates and driven on a pixel basis; a first electrode provided on a surface of one of the pair of substrates, for driving the liquid crystal; a second electrode provided on a surface of the other of the pair of substrates, for driving the liquid crystal; and conductive particles clamped between the pair of substrates, for obtaining electrical conduction between the first electrode and the second electrode, wherein the conductive particles are each provided with a projected shape in the surface thereof.

Besides, according to a further embodiment of the present invention, there is provided a liquid crystal projector for projecting an image displayed by a liquid crystal display onto a screen through an enlarging optical system, wherein the liquid crystal display includes: a liquid crystal interposed between a pair of oppositely disposed substrates and driven on a pixel basis; a first electrode provided on a surface of one of the pair of substrates, for driving the liquid crystal; a second electrode provided on a surface of the other of the pair of substrates, for driving the liquid crystal; and conductive particles clamped between the pair of substrates and each having a projected shape in the surface thereof, for obtaining electrical conduction between the first electrode and the second electrode.

In the present invention as above, a projected shape is provided in the surface of each of the conductive particles, whereby the pressure exerted for clamping the conductive particles between the pair of substrates are concentrated on the projected shapes, so that the spontaneous oxide film coating the surfaces of the first electrode and the second electrode can be easily broken. Besides, the projected shapes make it easy to exclude the residual resin in the adhesive, so that a stable electrical connection can be secured.

Therefore, according to the present invention, in obtaining the conduction between the first electrode and the second electrode on the pair of substrates, the electrical connection can be attained assuredly. This makes it possible to lower the compression ratio of the conductive particles and, hence, to enlarge the manufacturing process margins. As a result, it is possible to largely enhance the productivity of a liquid crystal device and of a display using the same.

### BRIEF DESCRIPTION OF THE DRAWINGS

Fig. 1 is a schematic sectional diagram for illustrating a liquid crystal device according to the present embodiment of the present invention;
Fig. 2 is a schematic plan view of the liquid crystal device according to the present embodiment;
Fig. 3 shows schematic sectional diagrams for illustrating the states of a conductive particle in relation to variations in the gap between a pair of substrates;
Fig. 4 shows schematic sectional diagrams for illustrating another embodiment of the present invention; and
Fig. 5 is a schematic diagram showing an example of a projection system using a liquid crystal display according to the present embodiment.

### DETAILED DESCRIPTION OF THE PREFERRED EMBODIMENTS

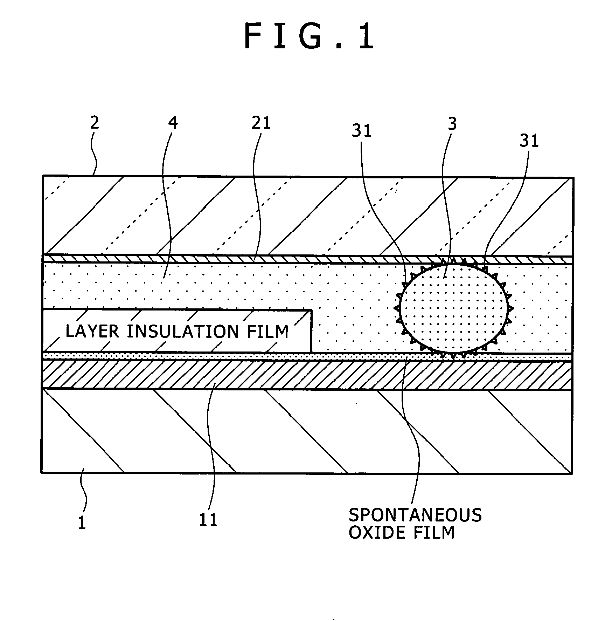

Now, an embodiment of the present invention will be described below, based on the drawings. Fig. 1 is a schematic sectional view for illustrating a liquid crystal device according to the present embodiment. Specifically, the liquid crystal device has a configuration in which a silicon drive substrate 1 and a glass substrate 2 are used as a pair of substrates disposed opposite to each other, the substrates 1 and 2 are adhered to each other in the state of maintaining a predetermined gap therebetween, and a liquid crystal (not shown) is interposed therebetween.

The silicon drive substrate is provided with a drive substrate side electrode (first electrode) 11 for supplying a voltage to a counter electrode (second electrode) 21 formed on the glass substrate 2, and, for electrical conduction between the drive substrate side electrode 11 and the counter electrode 21, conductive particles 3 are clamped between the silicon drive substrate 1 and the glass substrate 2.

The conductive particles 3 each have a structure in which an elastic spherical resin serves as a core of which the surface is coated with a metal such as nickel, gold, etc. The conductive particles 3 are mixed in an adhesive 4, which is applied to a part of the region of a sealing resin for the pair of substrates.

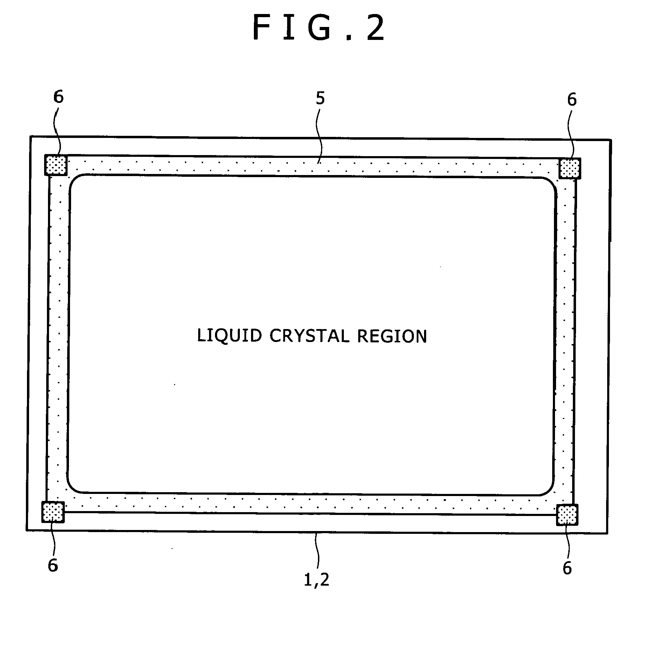

Fig. 2 is a schematic plan view of the liquid crystal device in the present embodiment. In adhering the silicon drive substrate 1 and the glass substrate 2 to each other in the state of providing a predetermined gap therebetween, for example, a sealing resin 5 with a gap-controlling spacers (not shown) mixed therein is applied to the periphery of a display region (liquid crystal sealing region) of the silicon drive substrate 1, and the silicon drive substrate 1 and the glass substrate 2 are laminated on each other through the sealing resin 5 therebetween. In this case, electrical conduction between the drive substrate side electrode 11 on the silicon drive substrate 1 and the counter electrode 21 on the glass substrate 2 is obtained as follows. In the condition where the sealing resin 5 has been preliminarily applied, the adhesive 4 with the conductive particles 3 mixed therein is applied to connection pad areas 6 provided at a part (e.g., corner areas) of the application region of the sealing resin 5, and the silicon drive substrate 1 and the glass substrate 2 are laminated on each other through the sealing resin 5 and the adhesive 4 therebetween.

When the silicon drive substrate 1 and the glass substrate 2 are thus laminated and the sealing resin 5 is cured, the gap between the silicon drive substrate 1 and the glass substrate 2 is set by the spacers mixed in the sealing resin. In addition, the conductive particles 3 having elasticity are elastically deformed under the pressure arising from the lamination of the silicon drive substrate 1 and the glass substrate 2, and are held in the state of being slightly crushed. The reaction forces arising from the elastic deformation put the conductive particles 3 into contact with the drive substrate side electrode 11 and the counter electrode 2, whereby electrical conduction between the electrodes can be obtained.

In the present embodiment, as the conductive particles 3 for obtaining electrical conduction between the pair of substrates, conductive particles each provided with a multiplicity of projected shapes 31 in the surface thereof are used. To be more specific, the metallic coating formed at the surface of each conductive particle 3 is provided with the projected shapes 31 of the same metal, whereby the pressure exerted on the conductive particle 3 from the pair of substrates is concentrated on the projected shapes 31, whereby the conductive particle 3 can be put in secure contact with the drive substrate side electrode 11 and the counter electrode 21.

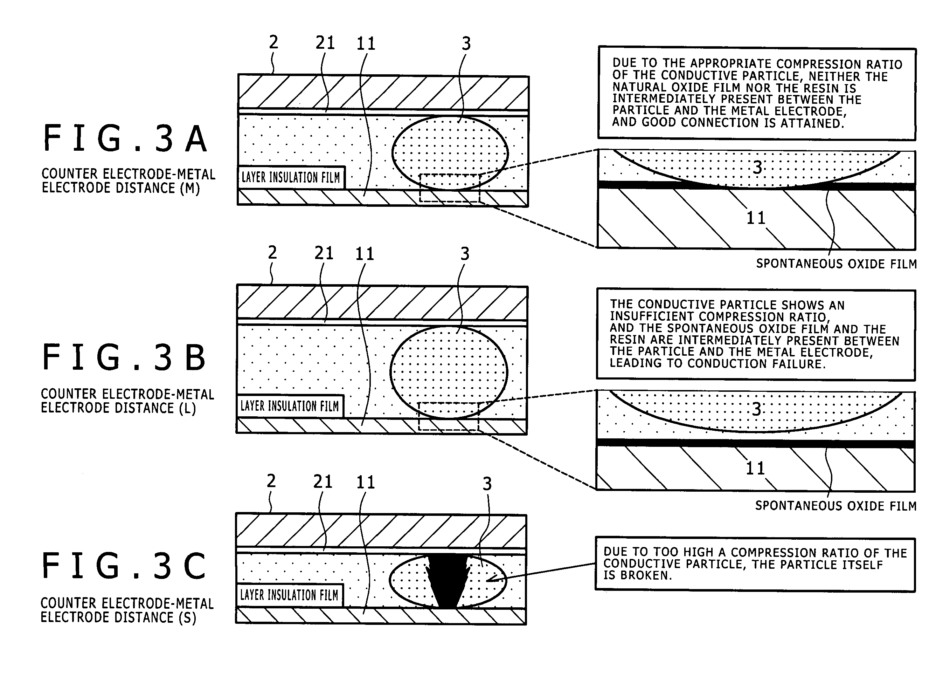

Here, based on the schematic diagrams shown in Fig. 3, the state of the conductive particle in relation to variations in the gap between the pair of substrates will be described. As shown in Fig. 3A, under a process design such that the distance between the drive substrate side electrode 11 and the counter electrode 21 is on a standard level (M) and the compression ratio of the conductive particle 3 is optimum, neither the spontaneous oxide film nor the adhesive (resin) is present between the conductive particle 3 and the electrode, so that a good conduction condition can be obtained.

On the other hand, when the distance between the drive substrate side electrode 11 and the counter electrode 21 is large, as shown in Fig. 3B, the compression ratio of the conductive particle 3 is insufficient. Therefore, the spontaneous oxide film and/or the adhesive would be present between the conductive particle 3 and the electrode, leading to conduction failure.

Besides, when the distance between the drive substrate side electrode 11 and the counter electrode 21 is small, as shown in Fig. 3C, the compression ratio of the conductive particle 3 is too high. Therefore, the conductive particle 3 would be deformed beyond the elastic deformation range thereof and be broken. In this case, again, conduction failure results.

Although the cause of the breakage of the conductive particle 3 can be restrained more assuredly as the compression ratio of the conductive particle 3 is lower, it may be necessary to adopt a certain degree of compression of the conductive particle 3 so as to enhance the property of close contact of the conductive particle 3 with the electrodes and to break the spontaneous oxide films deposited on the electrode surfaces, thereby obtaining secure contact. On the other hand, in the case where the gap between the pair of substrates is varied due to scattering thereof on a manufacturing basis, the above-mentioned insufficient compression ratio or breakage of the conductive particle would take place, with the result of conduction failure.

In the present embodiment, the surface of each conductive particle is provided with the projected shapes 31, whereby the pressure can be concentrated on the projected shapes 31 and, hence, the spontaneous oxide film can be broken easily. In addition, the resin which would otherwise be present between the conductive particle and the electrodes can be excluded easily. Therefore, conduction can be attained assuredly even if a lower compression ratio than that in the related art is adopted. Besides, if a scattering of the gap is generated, a margin up to the breakage of the conductive particle can be secured. Thus, the possibility of conduction failure due to insufficient compression or excessive compression can be lowered remarkably.

Usually, a spontaneous oxide film having a thickness of several nanometers is formed on the electrode surfaces, so that in the case of using the conductive particles (spherical ones) according to the related art for obtaining secure conduction, the conductive particles are deformed to a compression ratio of 30 to 40%. However, if the compression ratio exceeds 40%, the probability of breakage of the conductive particles would be raised. Therefore, it is desirable to set the compression ratio at about 10% so as to provide a margin. However, if the compression ratio of the conductive particles in the related art is set at 10%, the resistance between the electrodes would be scattered over the range of several kiloohms to several megaohms.

In view of the above, when the conductive particles 3 each having the projected shapes 31 in the surface thereof are used as in the present embodiment, it is possible to set the resistance between the electrodes at a value of not more than several hundreds of ohms, and to obtain secure conduction, even at the same compression ratio of 10% as above. In addition, since the compression ratio is as low as 10%, a margin up to the breakage of the conductive particles can be secured in case of a rise in the compression ratio due to narrowing of the gap between the electrodes; thus, the yield of the product can be enhanced. Incidentally, the compression ratio in the present embodiment is applicable in the range of 5% to 40%, and preferably the compression ratio is set in a range of 10% to 30%.

To be more specific, in the case where the gap between the electrodes is 3.5 °m, when the diameter of the conductive particles 3 is set at about 3.8 °m, the particle diameter after compression of 3.5 °m means that a compression ratio of about 10% can be obtained. Besides, the projection height of the projected shapes 31 is desirably set to be greater than the thickness of the spontaneous oxide film so as to securely break the spontaneous oxide film.

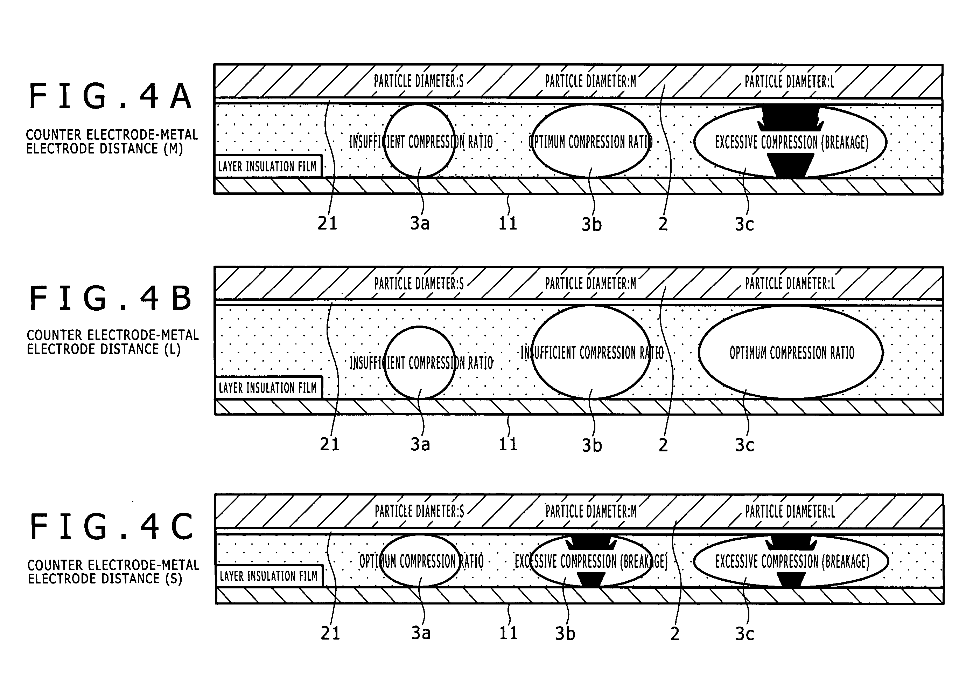

Fig. 4 shows schematic sectional diagrams for illustrating another embodiment. In this embodiment, as the particle diameter of the conductive particles having the projected shapes in the surfaces thereof described above, at least two kinds of particle diameters are used. Here, conductive particles 3a to 3c respectively having three different kinds of diameters are used in mixture. When the different-diameter conductive particles 3a to 3c are thus used, even upon scattering of the gap between the drive substrate side electrode 11 and the counter electrode 21 on a manufacturing basis, the compression ratio of the conductive particles 3 having someone of the three different diameters will be optimum, whereby stable connection performance can be obtained.

Specifically, as shown in Fig. 4A, in the case where the distance between the drive substrate side electrode 11 and the counter electrode 21 is on a standard level (M), the conductive particles 3a with a small particle diameter (S) would show an insufficient compression ratio, and the conductive particles 3c with a large particle diameter (L) would show an excessive compression, but the conductive particles 3b with a medium particle diameter (M) acquire an optimum compression ratio, so that the conductive particles 3b promise electrical conduction.

In addition, as shown in Fig. 4B, in the case where the distance between the drive substrate side electrode 11 and the counter electrode 21 is large (L), the conductive particles 3a and 3b respectively having a small particle diameter (S) and a medium particle diameter (M) would show insufficient compression ratios, but the conductive particles 3c with a large particle diameter (L) acquire an optimum compression ratio, so that the conductive particles 3c promise electrical conduction.

Furthermore, as shown in Fig. 4C, in the case where the distance between the drive substrate side electrode 11 and the counter electrode 21 is small, the conductive particles 3b and 3c respectively having a medium particle diameter (M) and a large particle diameter (L) would show excessive compression, but the conductive particles 3a with a small particle diameter (S) acquire an optimum compression ratio, so that the conductive particles 3a promise electrical conduction.

Here, in the case of using conductive particles with different particle diameters, it suffices to make such a setting that the compression ratio will be dispersed in the range of 10 to 40%. For example, in the case of using three kinds of particle diameters (S), (M) and (L), the compression ratios of about 10%, about 20% and about 30% are allotted to the different conductive particles. This makes it possible to assuredly cope with the scattering of the distance between the electrodes on a manufacturing basis.

As has been described above, since it is possible in this embodiment to enhance the conduction performance between the electrodes by the conductive particles, it is also possible to reduce the number of locations in the connection pad areas 6 at which to provide the conductive particles 3 shown in Fig. 2. Specifically, while the conductive particles 3 are provided at four locations consisting of the corner areas in the example shown in Fig. 2, it is possible to obtain the necessary electrical conduction and to contribute to a reduction in the device area even where the conductive particles 3 are provided only at, for example, three locations, two locations, or one location.

The liquid crystal device according to the present invention is applicable to a liquid crystal display for displaying image information by driving a liquid crystal on a pixel basis, and to a liquid crystal projector in which an image displayed by the liquid crystal display is projected onto a screen through an enlarging optical system.

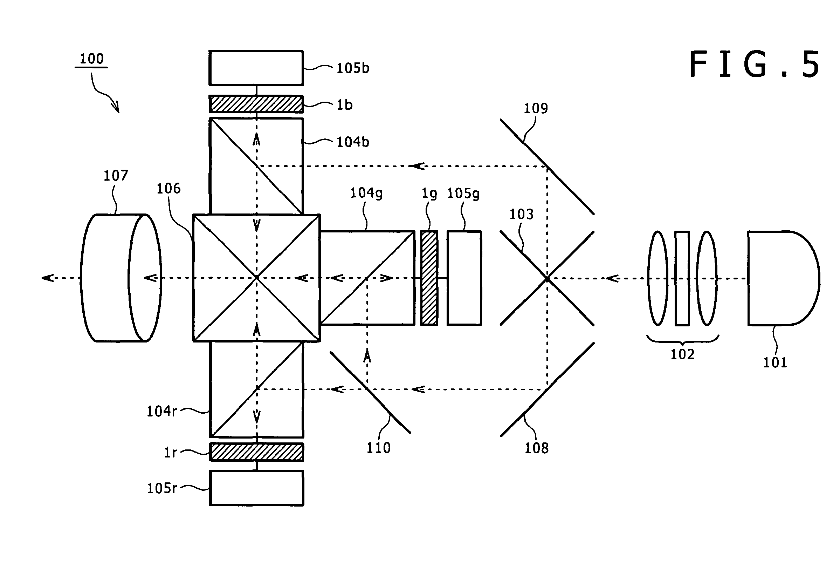

Fig. 5 is a schematic diagram showing an example of a projection system using a liquid crystal display according to the present embodiment. Specifically, the projection system 100 includes a lamp light source 101, a lens unit 102, a dichroic color separation filter 103, beam splitters 104r, 104g and 104b, liquid crystal displays 1r, 1g and 1b, drive circuits 105r, 105g and 105b, a prism 106, and a projection lens 107.

Since the liquid crystal displays 1r, 1g and 1b are of the reflection type, a transparent electrode is used as the counter electrode 21 formed on the glass substrate 2 shown in Fig. 1, and a reflective electrode formed of aluminum or the like is used as the drive substrate side electrode 11 provided on the silicon drive substrate 1.

In this system, the light outgoing from the lamp light source 101 is sent through the lens unit 102 to the dichroic color separation filter 103, where the light is divided through color separation into a beam of a blue component and a beam containing a green component and a red component, and the beams are outputted respectively into two directions. The beams separated into two directions are respectively sent to display units composed of reflection type liquid crystal displays 1r, 1g and 1b corresponding to three colors R (RED), G (GREEN) and B (BLUE) by total reflecting mirrors 108 and 109, a dichroic mirror 110 for separation into a green color beam and a red color beam, and the beam splitters 104r, 104g and 104b, then the beams modulated by the reflection type liquid crystal displays 1r, 1g and 1b based on picture signals corresponding to the three colors are synthesized by the prism 106, and the synthesized beam is projected by the projection lens 107.

For example, of the light from the lamp light source 101, the beam containing the green and red components obtained through the color separation by the dichroic color separation filter 103 is reflected by the total reflecting mirror 108, and the red color beam obtained through color separation by the dichroic mirror 110 is sent through the beam splitter 104r, to be incident on the liquid crystal display 1r corresponding to R (RED). Of the light from the lamp light source 101, the beam containing the green and red components obtained through the color separation by the dichroic color separation filter 103 is reflected by the total reflecting mirror 108, and the green color beam obtained through color separation by the dichroic mirror 110 is sent through the beam splitter 104g, to be incident on the liquid crystal display 1g corresponding to G (GREEN). Of the light from the lamp light source 101, the blue beam obtained through the color separation by the dichroic color separation filter 103 is reflected by the total reflecting mirror 109, and is sent through the beam splitter 104b, to be incident on the liquid crystal display 1b corresponding to B (BLUE).

The liquid crystal displays 1r, 1g and 1b are driven respectively by the drive circuits 105r, 105g and 105b, convert the incident beams into pictures by the liquid crystal layers and reflect the pictures, which are color synthesized by the prism 106, and the synthesized picture is sent to the projection lens 107. As a result, the picture corresponding to the three colors R (RED), G (GREEN) and B (BLUE) is projected onto the screen (not shown), i.e., a color image is reproduced.

Incidentally, the liquid crystal display according to the present embodiment is applicable also to other types than the above-mentioned reflection type, such as the transmission type. In that case, glass substrates may be used as the pair of substrates, and the electrodes formed on the substrates may be composed of transparent electrodes formed of ITO (Indium Tin Oxide) or the like.

It should be understood by those skilled in the art that various modifications, combinations, subcombinations and alterations may occur depending on the design requirements and other factors insofar as they are within the scope of the appended claims or the equivalents thereof.

## Claims

1. A liquid crystal device comprising:
a liquid crystal interposed between a pair of substrates disposed opposite to each other;
a first electrode provided on a surface of one of said pair of substrates, for driving said liquid crystal;
a second electrode provided on a surface of the other of said pair of substrates, for driving said liquid crystal; and
conductive particles clamped between said pair of substrates, for obtaining electrical conduction between said first electrode and said second electrode, wherein
said conductive particles are each provided with a projected shape in the surface thereof.

2. The liquid crystal device as set forth in claim 1, wherein
said conductive particles are each formed by coating the surface of an elastic substantially spherical resin with a metal having a projected shape.

3. The liquid crystal device as set forth in claim 1, wherein
said conductive particles are elastic, and are held in the state of being elastically deformed under a pressure exerted from said pair of substrates.

4. The liquid crystal device as set forth in claim 3, wherein
the diameters of said conductive particles, each having said projected shape and formed substantially spherically, are set to be greater than the distance between said electrodes on said pair of substrates in a range of 5% to 40%.

5. The liquid crystal device as set forth in claim 1, wherein
said conductive particles have at least two kinds of particle diameters.

6. The liquid crystal device as set forth in claim 1, wherein
said first electrode is a light-reflective electrode, and said second electrode is a light-transmitting electrode.

7. The liquid crystal device as set forth in claim 1, wherein
said first electrode and said second electrode are light-transmitting electrodes.

8. A liquid crystal display comprising:
a liquid crystal interposed between a pair of oppositely disposed substrates and driven on a pixel basis;
a first electrode provided on a surface of one of said pair of substrates, for driving said liquid crystal;
a second electrode provided on a surface of the other of said pair of substrates, for driving said liquid crystal; and
conductive particles clamped between said pair of substrates, for obtaining electrical conduction between said first electrode and said second electrode, wherein
said conductive particles are each provided with a projected shape in the surface thereof.

9. The liquid crystal display as set forth in claim 8, wherein
said conductive particles are elastic and are held in the state of being elastically deformed under a pressure exerted from said pair of substrates.

10. The liquid crystal display as set forth in claim 8, wherein
said conductive particles have at least two kinds of particle diameters.

11. The liquid crystal display as set forth in claim 8, wherein
said first electrode is a light-reflective electrode, and said second electrode is a light-transmitting electrode.

12. The liquid crystal display as set forth in claim 8, wherein
said first electrode and said second electrode are light-transmitting electrodes.

13. A liquid crystal projector for projecting an image displayed by a liquid crystal display onto a screen through an enlarging optical system, wherein
said liquid crystal display comprises:
a liquid crystal interposed between a pair of oppositely disposed substrates and driven on a pixel basis;
a first electrode provided on a surface of one of said pair of substrates, for driving said liquid crystal;
a second electrode provided on a surface of the other of said pair of substrates, for driving said liquid crystal; and
conductive particles clamped between said pair of substrates and each having a projected shape in the surface thereof, for obtaining electrical conduction between said first electrode and said second electrode.

14. The liquid crystal projector as set forth in claim 13, wherein
said conductive particles are elastic, and are held in the state of being elastically deformed under a pressure exerted from said pair of substrates.

15. The liquid crystal projector as set forth in claim 13, wherein
said conductive particles have at least two kinds of particle diameters.

16. The liquid crystal projector as set forth in claim 13, wherein
said first electrode is a light-reflective electrode, and said second electrode is a light-transmitting electrode.

17. The liquid crystal projector as set forth in claim 13, wherein
said first electrode and said second electrode are light-transmitting electrode.
